# EUROPEAN PATENT APPLICATION

(11) **EP 1 443 315 A1**
(43) Date of publication of application: **04.08.2004**
(21) Application number: 04001609.9
(22) Date of filing: 26.01.2004
(51) Int. Cl.: G01F 23/40, G01F 23/76, G01F 23/00

(54) **Liquid level gauge with inflatable float**

(30) Priority: 29.01.2003 KR 2003002945 U
(71) Applicant: Choi, Kibong, Seoul 153-023 (KR)
(72) Inventor: Choi, Kibong, Seoul 153-023 (KR)
(74) Representative: Beck, Michael Rudolf

(57) **Abstract**

Disclosed is a liquid level gauge for measuring the level of a liquid stored in a tank. The liquid level gauge of the present invention comprises a protective cap provided with a roller rotatably installed in a pipe frame, and a measuring rope with both ends individually connected to a buoyant member and a pulling weight, and rolled on the roller. The liquid level gauge is simply employed by a tank by installing the protective cap provided with the measuring rope in a measuring pipe connected to the inside of the tank.

## Description

The present invention relates to a liquid level gauge, and particularly to a liquid level gauge for simply measuring the level of gasoline stored within a gasoline storage tank laid under the ground at a gasoline station, etc.

More particularly, the present invention relates to a liquid level gauge for simply and accurately measuring the level of stored gasoline, compared with a conventional gauge for measuring the level of the stored gasoline by inserting a measuring rod into a pipe connected to the gasoline storage tank and measuring the level of the gasoline adhered to the measuring rod.

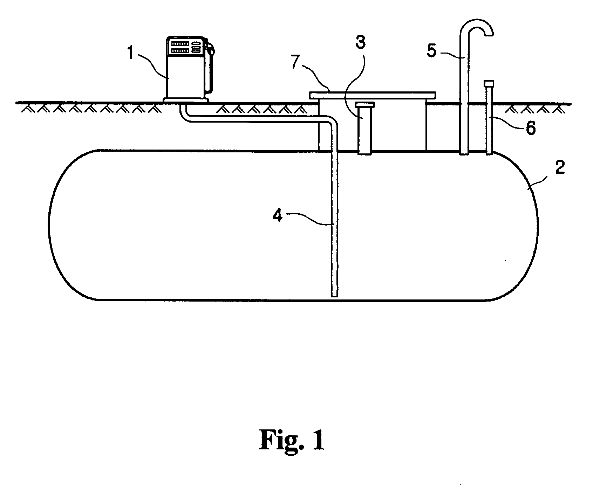

With reference to Fig. 1, a conventional liquid level gauge for measuring the level of gasoline stored within a gasoline storage tank 2 at a gasoline station comprises a measuring rod made of aluminum or iron and provided with a scale mark on the surface of the measuring rod. The measuring rod is inserted into the gasoline storage tank 2 via a pipe 3 connected to the gasoline storage tank 2, thereby measuring the level of the stored gasoline.

That is, in case that the level of the gasoline stored in the gasoline storage tank 2 is measured using the measuring rod, a cap is separated from the pipe 3 connected to the gasoline storage tank 2, and the measuring rod is inserted into the gasoline storage tank 2. Then, the level of the stored gasoline is measured by reading the scale mark on the measuring rod stained with the gasoline.

As a stored gasoline measuring apparatus without the use of a measuring rod, Japanese Patent Laid-open No. Hei 9-210751 discloses a float type liquid level gauge, and U.S. Patent No. 4,078,430 issued to Pemberton and Allen discloses a dual liquid level indicating gauge. However, these gauges are disadvantageous in that they have a complicated structure and require manipulation for installation within the gasoline storage tank. Accordingly, since great labor and time are required to install these gauges in the gasoline storage tank laid under the ground in advance, these gauges are uneconomical and inefficient.

That is, the above-described conventional gauges are installed in the gasoline storage tank when the tank is manufactured, and then buried under the ground together with the tank. Therefore, it is impossible to install these gauges in a conventional tank, which is buried under the ground in advance.

Accordingly, there is required a liquid level gauge, which can be simply installed in a conventional tank in use already buried under the ground.

Therefore, the present invention has been made in view of the above problems, and it is an object of the present invention to provide a liquid level gauge with a simple structure for accurately measuring the level of gasoline stored within a tank.

It is another object of the present invention to provide a liquid level gauge simply installed in a conventionally used tank buried under the ground in advance without stopping the use of the tank.

It is yet another object of the present invention to provide a liquid level gauge, which prevents a measuring rope from twisting by force imposed on the tank when the tank is refilled with gasoline.

In accordance with the present invention, the above and other objects can be accomplished by the provision of a liquid level gauge comprising a protective cap connected to the upper end of a measuring pipe and provided with a roller rotatably installed therein. Preferably, the protective cap may include a magnifying glass for magnifying a scale mark engraved on the surface of the measuring rope. Further, the magnifying glass may be configured so as to be opened and closed. The protective cap is formed to have the shape of a pipe, and the roller is rotatably installed in the protective cap. A measuring rope engraved with a scale mark is rolled on the roller, and both ends of the measuring rope are individually connected to a buoyant member and a pulling weight. The liquid level gauge measures the level of a liquid stored in the tank by the movement of the buoyant member according to the level of the liquid, i.e., the ascent and descent of the buoyant member. The buoyant member is made of a soft material and formed to have the shape of a balloon. The buoyant member is inserted into the tank via the measuring pipe, and a gas or a liquid is injected into the buoyant member so that the buoyant member is increased in volume and has buoyant force. In order to easily insert the buoyant member into the tank via the measuring pipe, the buoyant member may be connected to an end of an injection pipe with a designated length and a small diameter. Further, the buoyant member is increased in volume by injecting a gas or a liquid into the buoyant member via the injection pipe.

The buoyant member may have various structures, which can be folded up to be inserted into the tank via the measuring pipe and increased in volume by injecting a gas or a liquid into the buoyant member positioned in the tank. The buoyant member may be one suitably selected from synthetic resins such as PVC, polyurethane, etc. depending on the kind of liquid filling the tank. Preferably, the liquid injected into the buoyant member is the same material as that filling the tank.

When the liquid is injected into the tank, the buoyant member may be rotated in a circle by the power of the injected liquid, thus causing the end of the measuring rope connected to the buoyant member and the other end of the measuring rope connected to the pulling weight to be twisted. This twisting of the measuring rope causes malfunction of the liquid level gauge. In order to prevent the above twisting of the measuring rope, it is preferable to rotatably connect the buoyant member and the pulling weight to each of both ends of the measuring rope.

The above and other objects, features and other advantages of the present invention will be more clearly understood from the following detailed description taken in conjunction with the accompanying drawings, in which:
- Fig. 1: is a schematic view of a conventional tank buried under the ground at a gasoline station;
- Fig. 2: is an exploded view of a liquid level gauge in accordance with an embodiment of the present invention;
- Fig. 3a: is a partially enlarged view showing a connectional relation between a buoyant member and a measuring rope;
- Fig. 3b: is a partially enlarged view showing a connectional relation between a pulling weight and a measuring rope;
- Fig. 4: is a schematic view showing a connectional relation between a roller and a measuring rope; and
- Fig. 5: is a schematic view of a liquid level gauge of the present invention installed within a tank.

Now, preferred embodiments of the present invention will be described in detail with reference to the annexed drawings.

As shown in Fig. 1, a conventional tank is buried under the ground at a gasoline station, etc. The tank 2 is filled with gasoline via a gasoline injection port 6, and a measuring pipe 3 is installed on the tank 2 such that the measuring pipe 3 is connected to the inside of the tank 2. Conventional liquid level gauge comprises a measuring rod provided with a scale mark and inserted into the tank 2 via the measuring pipe 3, and the level of the gasoline stored in the tank is measured by reading the scale mark on the measuring rod stained with the gasoline. The conventional automatic liquid level gauge is conventionally installed in the tank 2 before the tank 2 is buried under the ground Accordingly, it is difficult to install the automatic liquid level gauge within the tank 2 already buried under the ground. In case that the automatic liquid level gauge is installed within the tank 2 buried under the ground in advance, the tank 2 must be exposed to the outside or an additional working process must be performed in the tank 2.

In order to solve the above problems, a liquid level gauge (gauge for measuring the level of stored gasoline) of the present invention is simply installed in the measuring pipe 3, which is opened by separating a manhole cover 7 from the measuring pipe 3.

As shown in drawings, the liquid level gauge of the present invention comprises a protective cap 20 connected to the upper end of the measuring pipe 3 connected to the inside of the tank 2, and a measuring rope 10 with both ends individually fixed to a buoyant member 39 and a pulling weight 49.

The protective cap 20 is formed to have the shape of a pipe, and includes cap frames 23-1 and 23-2 in which a roller 22 is rotatably installed, a perspective cap 21 installed on the cap frames 23-1 and 23-2 and provided with a window 21-1 connected to the upper ends of the cap frames 23-1 and 23-2, and a connection cap 24 for connecting the lower ends of the cap frames 23-1 and 23-2 to the measuring pipe 3. Here, a non-described number 22-2 represents a groove for receiving a bearing 22-1.

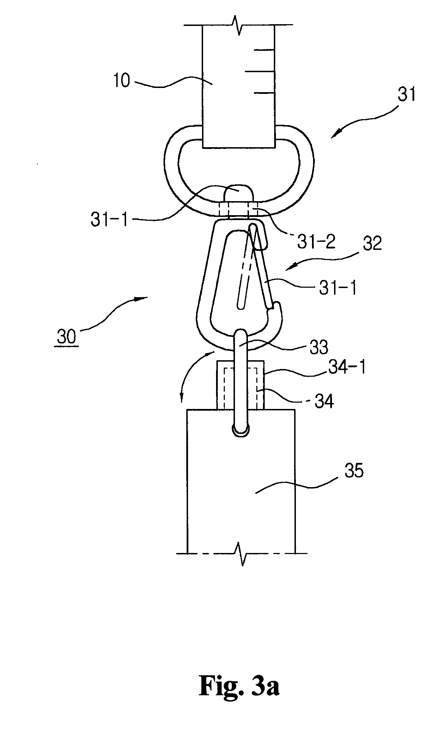

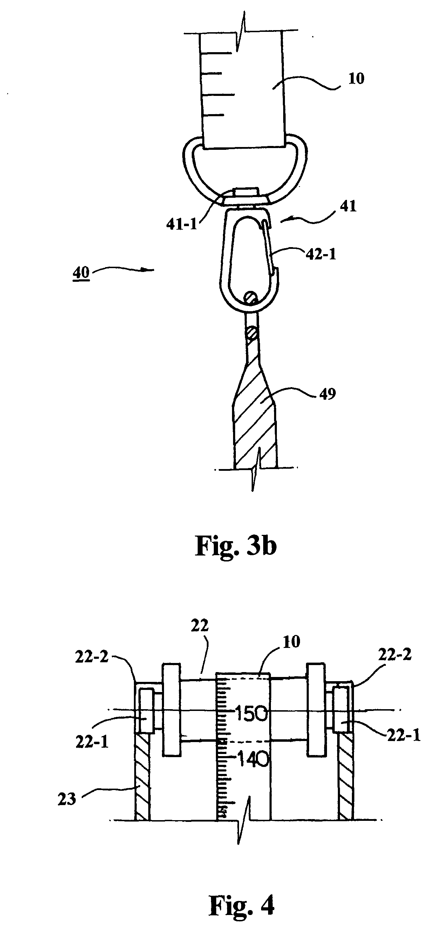

The measuring rope 10 provided with a scale mark engraved on its surface is rolled on the roller 22 installed in the protective cap 20. As shown in Figs. 3a and 3b, one end of the measuring rope 10 is connected to the buoyant member 39 floated on the surface of liquid in the tank 2, and the other end of the measuring rope 10 is connected to the pulling weight 49 with a designated weight.

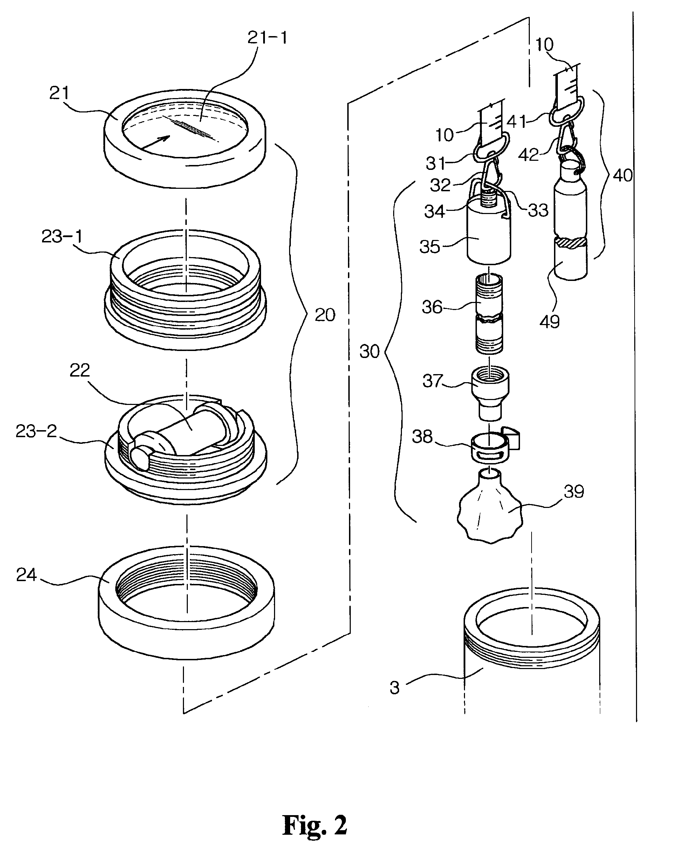

As shown in Fig. 3a, one end of the measuring rope 10 is connected to a loop 31, and then connected to a hook 32 provided with an operating lever 32-1 via a hole 31-2 formed through the lower end of the loop 31. A non-described number 31-1 represents a fixture. The hook 32 is connected to another loop 33, and the loop 33 is connected to an upper connection cap 35. A gas injection port 34 is installed on the upper end of the upper connection cap 35. As shown in Fig. 2, the upper connection cap 35 is connected to an injection pipe 36. The injection pipe 36 is a pipe with a designed length and a small diameter. A screw thread is formed in both ends of the outer circumference of the injection pipe 36 such that other elements are connected to the both ends of the injection pipe 36 using the screw thread. The lower end of the injection pipe 36 is connected to a lower connection cap 37, and the lower connection cap 37 is connected to the buoyant member 39 made of a soft material by a clamper 38. The above-described buoyant member 30 is rotatably connected to the measuring rope 10.

The other end of the measuring rope 10 is connected to a pulling weight portion 40. The pulling weight portion 40 includes a loop 41 connected to the end of the measuring rope 10, a hook 42 provided with an operating lever 42-1 and connected to the loop 41, and the pulling weight 49 connected to the hook 42. The above-described pulling weight portion 40 is rotatably connected to the measuring rope 10 (with reference to Figs. 2 and 3b).

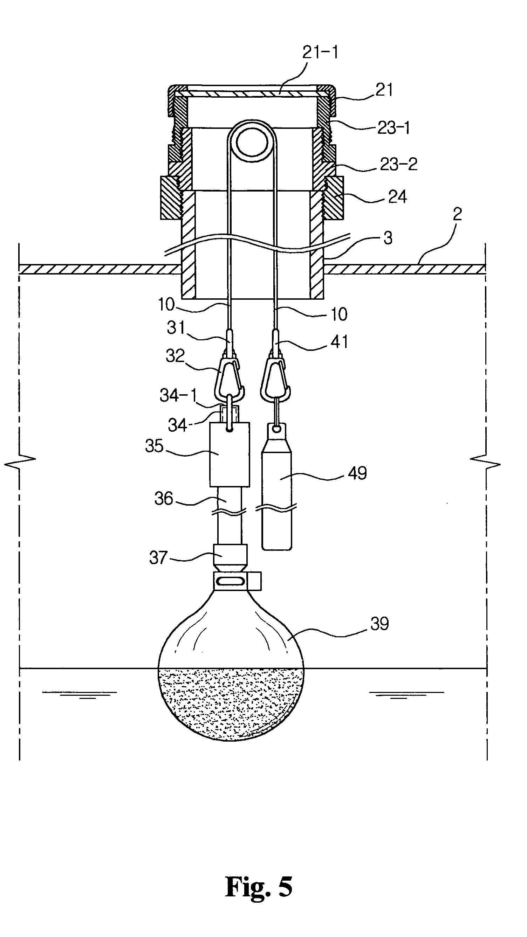

Hereinafter, with reference to Figs. 2 and 5, a process for installing the above-described liquid level gauge will be described.

First, the lower connection cap 37 is inserted into an inlet of the buoyant member 39 and then fixed to the buoyant member 39 using the clamper 38. Then, one end of the injection pipe 36 is connected to the lower connection cap 37, and the buoyant member 39 is folded up so as to have a suitable size and injected into the tank 2 via the measuring pipe 3. Here, the upper end of the injection pipe 36 is exposed to the outside of the measuring pipe 3. In order to increase the volume of the buoyant member 39, a liquid may be selectively injected into the buoyant member 39 via the injection pipe 36. Subsequently, the upper connection cap 35 is connected to the other end of the injection pipe 36. The loop 34 falls downward, and a gas is injected into the buoyant member 39 via the gas injection port 34. Then, the gas injection port 34 is closed with a plug 34-1. Thereby, the buoyant member 34 has designated weight and buoyant force. The hook 32 connected to the end of the measuring rope 10 is connected to the loop 33. The other end of the measuring rope 10 is rolled on the roller 22 and then turned downward, and the downward end of the measuring rope 10 is connected to the pulling weight 49 and then inserted into the measuring pipe 3. Subsequently, the protective cap 20 is connected to the measuring pipe 3 provided with the measuring rope 10. Thereby, the liquid level gauge is completely installed in the measuring pipe 3. The above liquid level gauge installed in the measuring pipe 3 is schematically shown in Fig. 5.

As apparent from the above description, the present invention provides a liquid level gauge, which can be simply installed in a conventional tank buried under the ground in advance in a short time. Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. Liquid level gauge comprising:
- a protective cap (20) provided with a roller (22) rotatably installed in a pipe frame (21) and a window (21-1) for allowing a user to see through the inside of the gauge from above, and connected to an upper end of a measuring pipe (3) connected to the inside of a tank (2); and
- a measuring rope (10) with both ends individually connected to a buoyant member (39) and a pulling weight (49), and rolled on the roller,
- wherein the buoyant member (39) made of a soft material is contracted in volume so that the buoyant member (39) is inserted from the upper end of the measuring pipe (3) into the tank (2); and the buoyant member (39) is expanded in the tank (2) so that the buoyant member (39) has buoyant force.

2. Liquid level gauge as set forth in claim 1, **characterized in that** the buoyant member (39) is connected to a lower end of an injection pipe (36), with a designated length, provided with a gas injection port installed on an upper end of the injection pipe (36); and the upper end of the injection pipe (36) is rotatably connected to the measuring rope (10).

3. Liquid level gauge as set forth in claim 1 or 2, **characterized in that** the pulling weight (49) is rotatably connected to the measuring rope (10).
